# EUROPÄISCHE PATENTANMELDUNG

(11) **EP 2 133 816 A1**
(43) Veröffentlichungstag der Anmeldung: **16.12.2009**
(21) Anmeldenummer: 09162555.8
(22) Anmeldetag: 12.06.2009
(51) Int. Cl.: G06K 7/10

(54) **Vorrichtung zum Erfassen von optischer Informationen auf einem Stückgut**

(30) Priorität: 11.06.2008 DE 102008029288
(71) Anmelder: Nobab GmbH, 70825 Korntal (DE)
(72) Erfinder: Fischer, Claus, 70825 Korntal (DE)
(74) Vertreter: Witte, Weller & Partner

(57) **Zusammenfassung**

Die Erfindung betrifft eine Vorrichtung (10) zum Erfassen von optischer Information (12) auf einem Stückgut (14), insbesondere auf einem Aufkleber auf einem Paket, mit einem ersten Sensor (30) mit einem ersten Sichtfeld zum Aufnehmen der optischen Information (12), wobei die Vorrichtung (10) einen zweiten Sensor (32) mit einem zweiten Sichtfeld zum Aufnehmen der optischen Information (12) aufweist, wobei das erste und das zweite Sichtfeld voneinander verschieden sind, und wobei der erste Sensor (30) und der zweite Sensor (32) an einem gemeinsamen Tragelement (22) angeordnet sind, das derart an einem verlagerbaren Halteelement (36) angeordnet ist, dass das Tragelement (22) für das Lesen der optischen Information (12) variabel relativ zu dem Stückgut (14) positioniert werden kann. Ferner betrifft die Erfindung die Verwendung einer solchen Vorrichtung (10) zum Lesen von optischer Information (12) auf einem Stückgut (14) (Fig. 1).

## Beschreibung

Die vorliegende Erfindung betrifft eine Vorrichtung zum Erfassen von optischer Information auf einem Stückgut, insbesondere auf einem Aufkleber auf einem Paket, mit einem ersten Sensor mit einem ersten Sichtfeld zum Aufnehmen von optischer Information.

Eine solche Vorrichtung ist aus der DE 20 2004 012 913 U1 bekannt.

Die Anzahl an Paketsendungen, die täglich bewegt wird, hat in den letzten Jahren deutlich zugenommen. Es ist nicht zu erkennen, dass dieser Trend in absehbarer Zeit stagnieren oder gar rückläufig sein könnte. Einer der Hauptgründe für diesen Anstieg liegt in der erheblichen Zunahme beim Handel über das Internet, wo Käufer und Verkäufer trotz räumlicher Entfernung über Online-Shops oder Internet-Auktionen zueinander finden können. Die gekaufte Ware wird dabei in aller Regel als Stückgut, insbesondere als Paket, verschickt.

Auf dem Weg vom Verkäufer zum Käufer durchläuft ein Stückgut in der Regel mindestens ein Sammeldepot. In einem solchen Depot wird eine Vielzahl von Sendungen für den weiteren Versandweg konsolidiert oder für die Auslieferung verteilt. So wird ein Stückgut beispielsweise mittels eines Lieferwagens bei einem Sammeldepot angeliefert, von dort mit einer Vielzahl weiterer Stückgüter in Abhängigkeit vom Zielort zusammengeführt und zu einem Verteildepot transportiert. Von dort wird das Stückgut dann wieder mit einem Lieferwagen zum Empfänger gebracht.

Um die Zeit für den Versandweg und die Kosten für den Versand gering zu halten, ist es ein großes Anliegen in der Logistikbranche, den Versandweg möglichst effektiv zu gestalten. Ein besonderes Augenmerk richtet sich dabei auf den Eingang von Stückgut bei dem Sammeldepot, da hier die Zielinformation erfasst wird und das sogenannte Routing für das Stückgut bestimmt wird. An dieser Schnittstelle müssen maschinenlesbare Daten möglichst schnell eingelesen werden, schwer identifizierbare Daten interpretiert werden und fehlerhafte Daten korrigiert oder ergänzt werden. Wenn dieser Prozess schnell durchgeführt werden kann, sind erhebliche Kosteneinsparungen möglich.

Die eingangs genannte DE 20 2004 012 913 U1 zeigt eine fortschrittliche Vorrichtung zum Erfassen und Bereitstellen von stückgutbezogenen Daten. Hier wird vorgeschlagen, dass ein zu verteilendes Paket über einen Transportpfad zu einem Arbeitsplatz transportiert wird. Dabei liest ein Arbeiter die auf dem Paketaufkleber angegebenen Daten des Pakets mittels eines Handscanner ein, wie er beispielsweise aus der DE 10 2005 039 197 A1 bekannt ist.

Wenngleich die vorgeschlagene Vorrichtung bereits eine hohe Abfertigungsrate ermöglicht, besteht weiterhin der Wunsch, die Abfertigungsrate noch weiter zu erhöhen.

Im Zusammenhang mit der Erfassung von Stückgut, welches in ein Sammeldepot eingebracht wird, sei außerdem auf die EP 0 658 499 A1 verwiesen. In dieser Schrift ist eine Teleskopförderbahn zum Fördern und Vermessen von Stückgut offenbart. Es wird vorgeschlagen, entlang der Förderstrecke eine Mess- und Wägeeinrichtung anzuordnen, die auch einen Volumenmessrahmen aufweist. Eine zuverlässige Erfassung von Informationen auf einem Stückgut, beispielsweise ein Barcode, ist hier aber nur dann möglich, wenn sich das Stückgut mit einer fest vorgegebenen Orientierung auf der Förderstrecke befindet. Bei einer falschen Positionierung des Stückguts auf der Transportfläche, muss die Erfassung des Stückguts kostenintensiv und zeitaufwendig an einem Sonderarbeitsplatz durchgeführt werden.

Es ist daher eine Aufgabe der vorliegenden Erfindung, eine verbesserte Vorrichtung zum Erfassen von optischer Information auf einem Stückgut aufzuzeigen, die eine hohe Abfertigungsrate beim Einbringen von Stückgut in ein Depot ermöglicht.

Diese Aufgabe wird bei einer Vorrichtung der eingangs genannten Art dadurch gelöst, dass die Vorrichtung einen zweiten Sensor mit einem zweiten Sichtfeld zum Aufnehmen von optischer Information aufweist, wobei das erste und das zweite Sichtfeld voneinander verschieden sind, und wobei der erste Sensor und der zweite Sensor an einem gemeinsamen Tragelement angeordnet sind, das derart an einem verlagerbaren Halteelement angeordnet ist, dass das Tragelement für das Lesen der optischen Information variabel relativ zu dem Stückgut positioniert werden kann.

Eine der Besonderheiten der vorliegenden Erfindung liegt darin, dass der erste und der zweite Sensor in einem Tragelement angeordnet sind, das wiederum von einem verlagerbaren Halteelement gehalten wird. Dadurch kann ein Benutzer das Tragelement auf einfache Weise in eine gewünschte Position bringen und kann das Tragelement danach loslassen, da es vom Halteelement gehalten wird. Dies bedeutet, dass der Benutzer das Tragelement und damit die Sensoren relativ zu dem Stückgut positionieren kann, oder relativ zu einem Transportband, auf dem sich die Stückgüter bewegen, und dennoch jederzeit bei Bedarf beide Hände frei haben kann.

Eine weitere Besonderheit liegt darin, dass der erste und der zweite Sensor gemeinsam in dem Tragelement angeordnet sind. Dadurch führt eine Verlagerung des Tragelements zu einer Verlagerung beider Sensoren. Da die Sensoren verschiedene Sichtfelder haben, kann sehr schnell eine große Fläche auf dem Stückgut nach einer gewünschten Information, insbesondere einem eindimensionalen oder zweidimensionalen Barcode und/oder einer OCR-lesbaren Addressangabe, abgesucht werden.

Die Freiheitsgrade bei der Verlagerung des Tragelements im Zusammenspiel mit dem Halteelement können in Abhängigkeit von der Anwendung sehr flexibel ausgestaltet werden. So kann insbesondere eine Verlagerbarkeit in eine oder mehrere Richtungen im Raum ermöglicht werden und/oder ein Verschwenken um eine oder mehrere Achsen, z.B. ein Schwenken, Kippen oder Neigen. Dadurch ist es besonders einfach möglich, die Vorrichtung beispielsweise zum Erfassen kleiner Stückgüter nahe an das Transportband zu führen und für große Stückgüter weit vom Transportband zu beabstanden.

Außerdem ist es auf einfache Weise möglich, die Vorrichtung vor, hinter oder seitlich von einem Stückgut zu positionieren, um dort die gewünschten Informationen zu erfassen. Wenn sich eine bestimmte Positionierung der Vorrichtung für eine Serie von Stückgütern eignet, kann der Benutzer die Vorrichtung entsprechend positionieren und die Reihe von Stückgütern schnell erfassen lassen, bis ein anderes Stückgut aufgrund seiner Form oder Größe ein neues Positionieren der Vorrichtung erfordert.

Das Halteelement ist in der Regel mit einem Befestigungselement an einer Decke, oder an einem Pfeiler angeordnet. Es ist insbesondere aber auch möglich, das Halteelement an einer Wand oder über eine Ständervorrichtung am Boden zu befestigen.

Soll eine größere Beweglichkeit entlang des Transportbands ermöglicht werden, so kann das Halteelement auch an einer fahrbaren Brücke befestigt werden.

Bei der Ausgestaltung der Vorrichtung ist es insbesondere bevorzugt, dass auch das Auswerten der optischen Information in der Vorrichtung stattfindet. So kann die Vorrichtung insbesondere eine Bildauswerteeinheit aufweisen, die die erfassten optischen Informationen der Sensoren alternierend oder der Reihe nach auswertet. Für eine besonders schnelle Auswertung wird bevorzugt jedem Sensor eine eigene Bildauswerteeinheit zugeordnet.

Damit ist die Aufgabe vollständig gelöst.

Bei einer vorteilhaften Ausgestaltung der Erfindung weist das Trageelement mindestens einen Hauptkörper mit einer Längserstreckung auf, wobei der erste und der zweite Sensor entlang der Längserstreckung angeordnet sind.

Diese Bauweise ist besonders günstig und besonders kompakt. Die Vorrichtung ist dadurch besonders leicht zu bedienen und bietet aufgrund der Erfassung durch die mindestens zwei Sensoren einen großen Erfassungsbereich.

Bei einer weiteren vorteilhaften Ausgestaltung der Erfindung ist ein erster zentraler Sichtfeldvektor des ersten Sichtfelds nicht parallel zu einem zweiten zentralen Sichtfeldvektor des zweiten Sichtfelds orientiert.

Diese Ausgestaltung bietet für viele Anwendungsfälle ein schnelleres Erfassen der gewünschten Information, insbesondere bei erschwerten Erkennungsbedingungen, wie z.B. einem verschmutzten Adressaufkleber, einer unebenen Oberfläche des Stückguts oder wenn sich der Adressaufkleber unter einer leicht spiegelnden Oberfläche befindet. Da die beiden Sichtfeldvektoren nicht parallel zueinander liegen, ergeben sich unterschiedliche Blickwinkel auf das Stückgut. Da in der Regel einer der Blickwinkel besser geeignet ist, die optische Information zu erfassen als der andere, kann auch unter erschwerten Bedingungen eine schnelle und sichere Erfassung der optischen Information gewährleistet werden.

Die beiden Sichtfeldvektoren können aber auch so orientiert sein, dass sie bei entsprechender Positionierung der Vorrichtung zwei verschiedene Seiten des Stückguts erfassen können. Dadurch kann auch dann eine schnelle Erfassung gewährleistet werden, wenn sich die gesuchte optische Information nicht auf der Oberseite des Stückguts, sondern an einer Seite befindet. Für besondere Anwendungen kann es auch vorteilhaft sein, die Sichtfeldvektoren antiparallel auszurichten, um so zwei gegenüberliegende Seiten zu erfassen.

Bei einer weiteren bevorzugten Ausgestaltung der Erfindung weist das Tragelement mindestens einen Hauptkörper mit einer Längserstreckung und mindestens einen zur Längserstreckung des Hauptkörpers in einem Winkel stehenden Nebenkörper auf.

Diese Ausgestaltung bietet eine erhöhte Flexibilität bei der Anordnung der Sensoren, insbesondere wenn mehr als zwei Sensoren verwendet werden. Dadurch lassen sich auch die gewünschten Sichtfeldvektoren bzw. Betrachtungswinkel einstellen, von denen man eine besonders gute Erfassungsrate erwarten kann. Dafür ist mindestens einer der Sensoren im Hauptkörper und ein weiterer Sensor im Nebenkörper angeordnet. Der Nebenkörper kann sich auch in Längsrichtung, aber in einem Winkel zum Hauptkörper, erstrecken. Der Nebenkörper kann auch quer zur Längserstreckung des Hauptkörpers ausgerichtet sein. Schließlich können auch verschiedene Bereiche des Nebenkörpers verschieden winklig und/oder quer zur Längserstreckung des Hauptkörpers stehen.

Bei einer weiteren vorteilhaften Ausgestaltung der Erfindung ist zwischen dem Hauptkörper und dem Nebenkörper ein Verschwenkelement angeordnet, so dass der Nebenkörper relativ zum Hauptkörper verschwenkt werden kann.

Dies ermöglicht es auf besonders einfache Weise, die Vorrichtung an verschiedene Bedingungen bei der Erfassung der optischen Information anzupassen, z.B. hinsichtlich der Größe der Stückgüter oder wo die gesuchte optische Information am ehesten zu erwarten ist. Die Verschwenkbarkeit erfolgt vorzugsweise durch ein Scharnier, kann aber auch durch andere Verstellmechanismen, insbesondere mittels eines Elektromotors, erzielt werden.

Bei einer weiteren vorteilhaften Ausgestaltung der Erfindung weist der Nebenkörper eine Schnittstelle auf, an der ein Zusatzkörper für die Aufnahme eines Sensors angeordnet werden kann. Diese Ausgestaltung bietet eine nochmals gesteigerte Variabilität der Vorrichtung. Die Vorrichtung kann dann sowohl dauerhaft um einen oder mehrere Sensoren erweitert werden oder aber in Abhängigkeit von den jeweiligen aktuellen Bedingungen angepasst werden.

Bei einer weiteren vorteilhaften Ausgestaltung der Erfindung weist die Vorrichtung mindestens ein schlagfestes Gehäuse auf, in dem der erste und der zweite Sensor angeordnet sind.

Auf diese Weise können die Sensoren besonders gut geschützt werden, so dass auch bei harter Beanspruchung der Vorrichtung eine dauerhafte, zuverlässige Funktionsweise ermöglicht werden kann.

Bei einer weiteren vorteilhaften Ausgestaltung der Erfindung weist die Vorrichtung mindestens eine Beleuchtungseinheit zum Beleuchten des Stückguts auf.

Diese Ausgestaltung ermöglicht es, die Erkennung zu verbessern, wenn Sensoren eingesetzt werden, die - anders als z.B. ein Laserscanner - über keine eigene Lichtquelle verfügen. Die verbesserte Ausleuchtung des Sichtfelds erhöht den möglichen Kontrast, wodurch eine schnellere und weniger fehlerbehaftete Erkennung der optischen Information ermöglicht wird.

Bei einer weiteren vorteilhaften Ausgestaltung der Erfindung weist die Vorrichtung mindestens eine Lichtquelle und mindestens einen der Lichtquelle zugeordneten Lichtsensor auf, wobei die Lichtquelle und der Lichtsensor derart zueinander angeordnet sind, dass das Tragelement so positioniert werden kann, dass sich das Stückgut zwischen der Lichtquelle und dem Lichtsensor befindet.

Damit verfügt die Vorrichtung dann über eine Lichtschranke, die sich vielfältig einsetzen lässt. Insbesondere lässt sich dabei ermitteln, ob sich ein Stückgut im Arbeitsbereich der Vorrichtung befindet. Wenn dies der Fall ist, kann die Erfassung der optischen Information gestartet werden. Außerdem kann es vorteilhaft sein, ein Transportband beim Eintreten des Stückguts in den Arbeitsbereich der Vorrichtung anzuhalten, bis die Erfassung abgeschlossen ist, und erst dann das Stückgut auf dem Transportband weiterzubefördern.

Werden mehrere Lichtschranken mit entsprechenden Lichtquellen und Lichtsensoren verwendet, so können vorzugsweise Abmessungen des Stückguts, wie z.B. Länge oder Breite, schnell ermittelt werden.

Bei einer weiteren vorteilhaften Ausgestaltung der Erfindung weist das Halteelement eine mindestens zweiteilige Teleskopvorrichtung auf.

Diese Ausgestaltung ermöglicht eine gute Verlagerbarkeit bei gleichzeitiger besonderer Stabilität des Halteelements.

Bei einer weiteren vorteilhaften Ausgestaltung weist das Halteelement einen mindestens zweiteiligen Gelenkarm auf.

Diese Ausgestaltung bietet eine besonders einfache und flexible Handhabung. Der Gelenkarm kann dabei in beliebige Richtungen schwenkbar sein oder - ähnlich wie bei einer Schreibtischlampe mit einem Gelenkgestell - in mindestens eine Richtung zwangsgeführt sein.

Schließlich wird die Erfindung auch durch die Verwendung einer oben beschriebenen Vorrichtung zum Lesen von optischer Information auf einem Stückgut, insbesondere von einem Aufkleber auf einem Paket, gelöst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung näher dargestellt und werden in der nachfolgenden Beschreibung näher erläutert. Es zeigen:
- Fig. 1: eine erste Ausführungsform der erfindungsgemäßen Vorrichtung, die sich an einem Transportband im Einsatz befindet;
- Fig. 2: eine vergrößerte Darstellung der in Fig. 1 gezeigten Vorrichtung;
- Fig. 3: eine zweite Ausführungsform einer erfindungsgemäßen Vorrichtung;
- Fig. 4: eine dritte Ausführungsform einer erfindungsgemäßen Vorrichtung; und
- Fig. 5: eine weitere Ansicht der Vorrichtung gemäß Fig. 4 mit gelöstem Zusatzkörper.

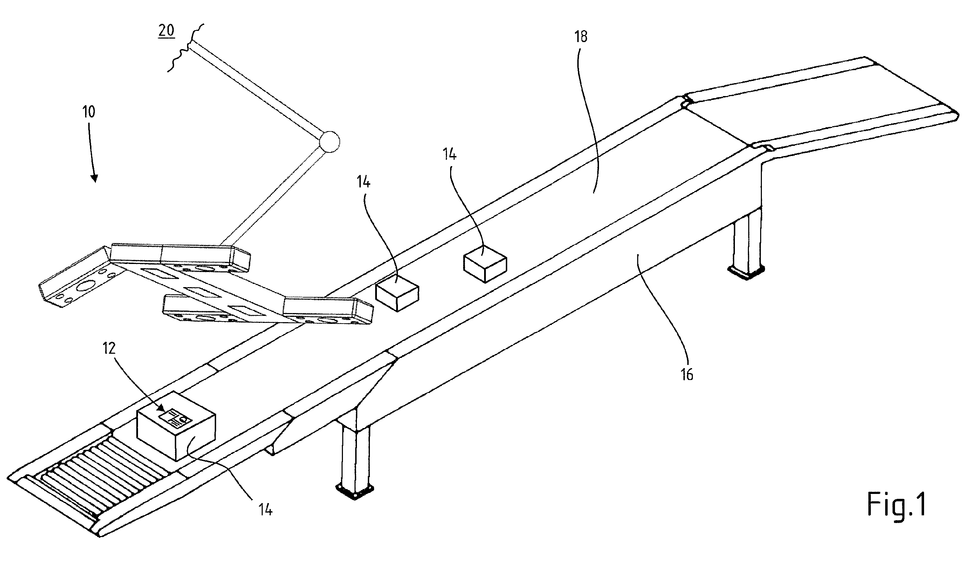

Fig. 1 zeigt eine Vorrichtung 10 zum Erfassen von optischer Information 12 auf einem Stückgut 14, insbesondere auf einem Aufkleber auf einem Paket, wobei die Vorrichtung 10 hier über einer Transportvorrichtung 16 mit einem Transportband 18 angeordnet ist. Dabei ist die Vorrichtung an einer nicht näher dargestellten Decke 20 befestigt.

Die prinzipielle Arbeitsweise ist wie folgt. Die Stückgüter 14 werden vom Transportband 18 transportiert und bewegen sich unter der Vorrichtung 10 entlang. Mittels der Vorrichtung 10 wird die optische Information 12 auf dem jeweiligen Stückgut 14 erfasst. Ein Arbeiter (nicht gezeigt) kann bei Bedarf die Vorrichtung 10 so positionieren, dass eine gute Erfassung der optischen Information 12 möglich ist. Die Vorrichtung 10 wird nun im Detail erläutert.

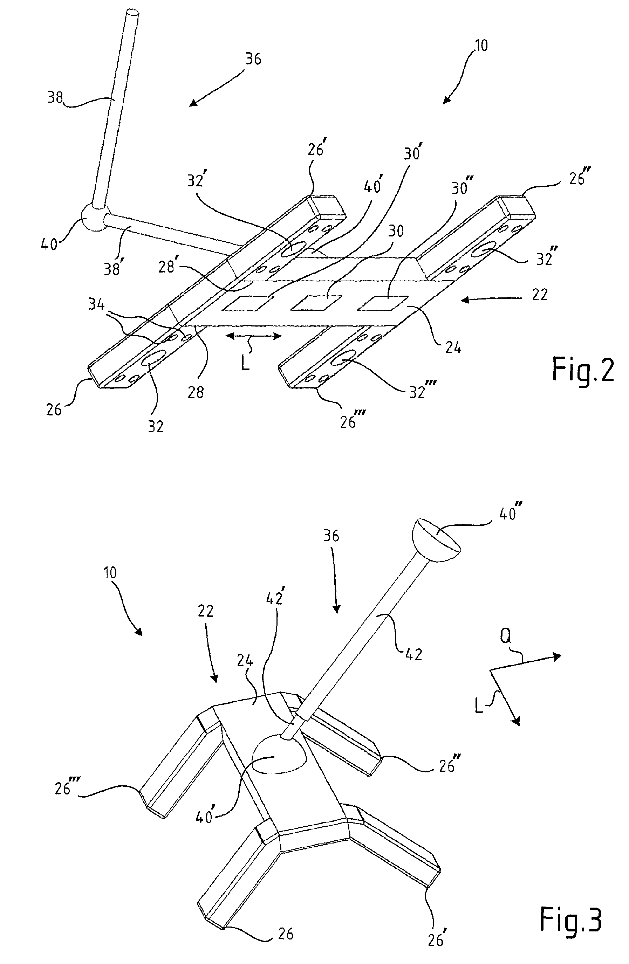

Fig. 2 zeigt ein erstes Ausführungsbeispiel der Vorrichtung 10 gemäß der Fig. 1. Die Vorrichtung 10 weist ein Tragelement 22 auf, das hier mit einem schlagfesten Gehäuse ausgebildet ist und einen Hauptkörper 24 mit einer Längserstreckung L und vier Nebenkörper 26, 26', 26", 26''' hat. Die Nebenkörper 26, 26', 26", 26''' stehen in einem Winkel zur Längserstreckung L des Hauptkörpers 24. Die Nebenkörper 26, 26', 26", 26''' sind hier baugleich ausgeführt, können aber auch unterschiedlich ausgestaltet werden. Wenngleich hier vier Nebenkörper 26, 26', 26", 26''' gezeigt sind, ist die Erfindung auch ohne Nebenkörper oder mit einem, zwei oder drei Nebenkörpern 26, 26', 26", 26''' zu realisieren.

Zwei Nebenkörper 26, 26' sind jeweils über ein Verschwenkelement 28, 28' in der Art eines Scharniers am Hauptkörper 24 angeordnet, so dass die Nebenkörper 26, 26' relativ zum Hauptkörper 24 verschwenkt werden können, siehe hierzu die in der Fig. 1 gezeigte Verschwenkung des Nebenkörpers 26. Im Hauptkörper 24 ist ein erster Sensor 30 mit zwei weiteren Sensoren 30', 30" angeordnet. Der Nebenkörper 26 weist einen zweiten Sensor 32 und die weiteren Nebenkörper 26', 26", 26''' weitere Sensoren 32', 32", 32''' auf. Jeder Nebenkörper 26, 26', 26", 26''' weist mehrere Beleuchtungseinheiten 34 auf, mit denen das Stückgut beleuchtet werden kann. Die Beleuchtungseinheiten 34 können nach Belieben angeordnet werden, auch am Hauptkörper 24, oder sogar ganz entfallen, wobei jedoch die gezeigte Anordnung von mindestens zwei Beleuchtungseinheiten 34 eine besonders gute Ausleuchtung ermöglicht.

Das erste Sichtfeld des ersten Sensors 30 und das zweite Sichtfeld des zweiten Sensors 32 sind verschieden von einander. Der erste Sensor 30 und der zweite Sensor 32 sind in dem gemeinsamen Tragelement 22 angeordnet. Das Tragelement 22 ist an einem verlagerbaren Halteelement 36 angeordnet, so dass das Tragelement 22 für das Lesen der optischen Information 12 variabel relativ zu dem Stückgut 14 positioniert werden kann. Das Halteelement 36 ist hier als zweiteiliger Gelenkarm 38, 38' mit zwei Kugelgelenken 40, 40' ausgeführt.

Das aufgezeigte Konzept bietet eine große Anzahl an Möglichkeiten, den ersten Sensor 30, den zweiten Sensor 32, die Nebenkörper 26, 26', 26", 26''' und die Beleuchtungseinheiten 34 in einer solchen Anzahl und an solchen Positionen zu verwenden, wie es für eine bestimmte Anwendung als vorteilhaft angesehen wird. Durch die Verschwenkbarkeit der Nebenkörper 26, 26', die auch als Verschwenkbarkeit in der Längsrichtung L ausgeführt werden könnte, lassen sich die Sichtfelder des zweiten Sensors 32 und des weiteren Sensors 32' leicht verändern, um so eine bestmögliche Erfassung der optischen Information 12 zu ermöglichen.

Bei den Sensoren 30, 30', 30", 32, 32', 32", 32''' können gleichartige Sensortypen verwendet werden. Bevorzugt handelt es sich aber um mindestens zwei verschiedene Sensortypen, wobei insbesondere Laserscanner und Kameras vorteilhaft eingesetzt werden können.

Fig. 3 zeigt ein zweites Ausführungsbeispiel einer Vorrichtung 10. Das Tragelement 22 weist wieder einen Hauptkörper 24 und vier Nebenkörper 26, 26', 26", 26''' auf, wobei die Nebenkörper 26, 26', 26", 26''' aber nicht nur quer zur Längserstreckung L stehen, sondern zudem winklig zur Längserstreckung L stehen, genauer gesagt in einem Winkel zu einer gedachten Ebene stehen, die von der Längserstreckung L und der Quererstreckung Q des Hauptkörpers 24 aufgespannt wird. Die Nebenkörper 26, 26', 26", 26''' sind hier wie in der Fig. 2 ausgestattet.

Im Gegensatz zur Fig. 2 ist das Halteelement 36 bei dieser Vorrichtung 10 als zweiteilige Teleskopvorrichtung 42, 42' mit zwei Kugelgelenken 40', 40" ausgeführt. Dadurch kann das Halteelement 36 besonders stabil ausgestaltet werden.

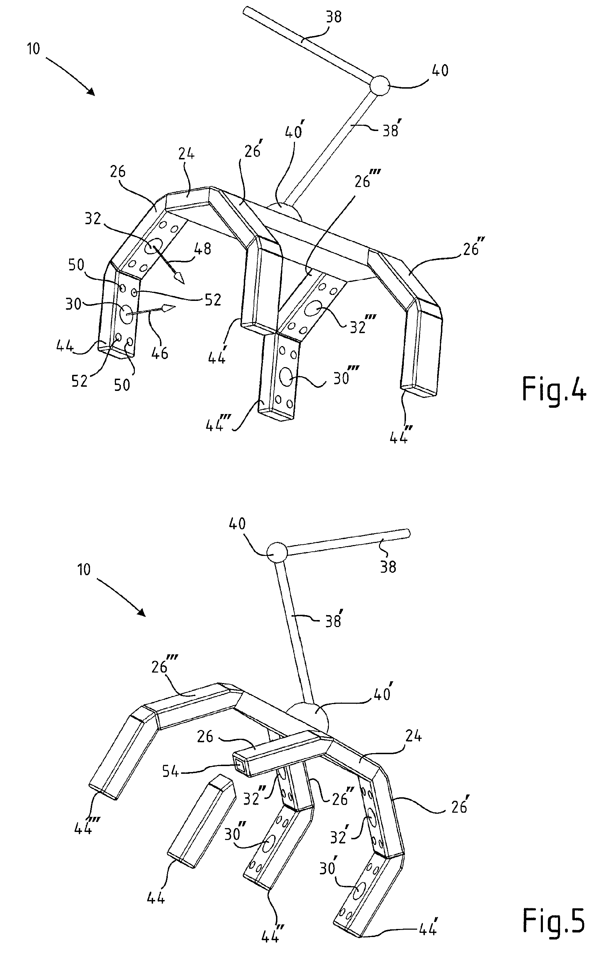

Fig. 4 zeigt ein drittes Ausführungsbeispiel der Vorrichtung 10. Diese Vorrichtung weist das Halteelement 36 gemäß der Fig. 2 und das Tragelement 22 gemäß der Fig. 3 auf, wobei jedoch an den Nebenkörpern 26, 26', 26", 26''' Zusatzkörper 44, 44', 44", 44''' angeordnet sind. Bezüglich der Sensoren ist festzustellen, dass der Hauptkörper 24 hier keine Sensoren aufweist und dass der erste Sensor 30 und die weiteren Sensoren 30', 30", 30''' in den Zusatzkörpern 44, 44', 44", 44''' angeordnet sind. Zur Verdeutlichung ist in dieser Figur außerdem gezeigt, wie der erste Sichtfeldvektor 46 und der zweite Sichtfeldvektor 48 gewählt sind, und dass die Sichtfeldvektoren 48, 46 nicht parallel sind.

Wenngleich es möglich ist, die Zusatzkörper 44, 44', 44", 44"' in ähnlicher Weise wie die Nebenkörper 26, 26', 26", 26''' auszurüsten, wurden die Zusatzkörper 44, 44', 44", 44''' hier jeweils mit zwei Lichtquellen 50 und zwei Lichtsensoren 52 ausgerüstet. Dabei arbeitet jeweils eine Lichtquelle 50 an einem Zusatzkörper 44, 44', 44", 44''' mit dem entsprechenden Lichtsensor 52 an dem gegenüberliegenden Zusatzkörper 44, 44', 44", 44''' zusammen. Konkret bedeutet dies hier, dass die Zusatzkörper 44, 44' vier Lichtschranken erzeugen und dass die Zusatzkörper 44" und 44"' vier weitere Lichtschranken erzeugen. Natürlich ist es auch möglich, mehr oder weniger Lichtschranken zu erzeugen oder beispielsweise eine Lichtquelle 50 in einen Nebenkörper 26, 26', 26", 26''' einzusetzen und diese mit einem Lichtsensor 52 in einem Zusatzkörper oder einem anderen Nebenkörper 26, 26', 26", 26"' zusammenwirken zu lassen.

Eine weitere Besonderheit der dritten Ausführungsform der Vorrichtung 10 ist in der Fig. 5 dargestellt. Hier ist zu erkennen, dass mindestens der Nebenkörper 26 eine Schnittstelle 54 aufweist, an der der Zusatzkörper 44 mit dem ersten Sensor 30 angeordnet werden kann. Auf diese Weise kann die Vorrichtung 10 leicht erweitert werden, wenn höhere Anforderungen an die Vorrichtung 10 gestellt werden. Genauso einfach können die Zusatzkörper 44, 44', 44", 44"' bei Bedarf auch wieder entfernt werden. Die Zusatzkörper 44, 44', 44", 44"' können individuell hinzugefügt oder abgenommen werden, so dass sich eine Vielzahl von Kombinationsmöglichkeiten ergibt.

Zusammenfassend ist festzustellen, dass die erfindungsgemäße Vorrichtung aufgrund der Anordnung von mindestens zwei Sensoren mit verschiedenen Sichtfeldern in einem Tragelement eine einfache und kostengünstige Möglichkeit aufzeigt, eine hohe Abfertigungsrate an einem Paketdepot zu erzielen. Dabei kann die Vorrichtung natürlich auch allgemein zur Erfassung von optischer Information verwendet werden und ist nicht auf den Einsatz als Stückguterfassungsvorrichtung beschränkt. Die Vorrichtung bietet darüber hinaus eine hohe Flexibilität hinsichtlich der Anzahl und der Positionierung der Sensoren. Außerdem können auf einfache Weise Erweiterungen vorgenommen werden, sei es durch zusätzliche Sensoren, Beleuchtungseinheiten oder Lichtschranken. Schließlich kann die Vorrichtung auch modular ausgebildet werden, um so die Möglichkeit zu haben, eine Anpassung an sich ändernde Anforderungen vorzunehmen.

## Patentansprüche

1. Vorrichtung (10) zum Erfassen von optischer Information (12) auf einem Stückgut (14), insbesondere auf einem Aufkleber auf einem Paket, mit einem ersten Sensor (30) mit einem ersten Sichtfeld zum Aufnehmen der optischen Information (12), **dadurch gekennzeichnet, dass** die Vorrichtung (10) einen zweiten Sensor (32) mit einem zweiten Sichtfeld zum Aufnehmen der optischen Information (12) aufweist, wobei das erste und das zweite Sichtfeld voneinander verschieden sind, und wobei der erste Sensor (30) und der zweite Sensor (32) an einem gemeinsamen Tragelement (22) angeordnet sind, das derart an einem verlagerbaren Halteelement (36) angeordnet ist, dass das Tragelement (22) für das Lesen der optischen Information (12) variabel relativ zu dem Stückgut (14) positioniert werden kann.

2. Vorrichtung nach Anspruch 1, **dadurch gekennzeichnet, dass** das Tragelement (22) mindestens einen Hauptkörper (24) mit einer Längserstreckung (L) aufweist, wobei der erste und der zweite Sensor (30, 32) entlang der Längserstreckung (L) angeordnet sind.

3. Vorrichtung nach Anspruch 1 oder 2, **dadurch gekennzeichnet, dass** ein erster zentraler Sichtfeldvektor (46) des ersten Sichtfelds nicht parallel zu einem zweiten zentralen Sichtfeldvektor (48) des zweiten Sichtfelds orientiert ist.

4. Vorrichtung nach einem der vorhergehenden Ansprüche, **dadurch gekennzeichnet, dass** das Tragelement (22) mindestens einen Hauptkörper (24) mit einer Längserstreckung (L) und mindestens einen Nebenkörper (26, 26', 26", 26''') aufweist, der zur Längserstreckung (L) des Hauptkörpers (24) in einem Winkel steht und in dem einer der Sensoren (30, 32) angeordnet ist.

5. Vorrichtung nach Anspruch 4, **dadurch gekennzeichnet, dass** zwischen dem Hauptkörper (24) und dem Nebenkörper (26, 26') ein Verschwenkelement (28, 28') angeordnet ist, so dass der Nebenkörper (26, 26') relativ zum Hauptkörper (24) verschwenkt werden kann.

6. Vorrichtung nach Anspruch 4 oder 5, **dadurch gekennzeichnet, dass** der Nebenkörper (26) eine Schnittstelle aufweist, an der ein Zusatzkörper (44) mit einem Sensor (30) angeordnet werden kann.

7. Vorrichtung nach einem der vorhergehenden Ansprüche, **dadurch gekennzeichnet, dass** das Tragelement (22) mit einem schlagfesten Gehäuse ausgebildet ist.

8. Vorrichtung nach einem der vorhergehenden Ansprüche, **dadurch gekennzeichnet, dass** die Vorrichtung (10) mindestens eine Beleuchtungseinheit (34) zum Beleuchten des Stückguts (14) aufweist.

9. Vorrichtung nach einem der vorhergehenden Ansprüche, **dadurch gekennzeichnet, dass** die Vorrichtung mindestens eine Lichtquelle (50) und mindestens einen der Lichtquelle (50) zugeordneten Lichtsensor (52) aufweist, wobei die Lichtquelle (50) und der Lichtsensor (52) derart zueinander angeordnet sind, dass das Tragelement (22) so positioniert werden kann, dass sich das Stückgut (14) zwischen der Lichtquelle (50) und dem Lichtsensor (52) befindet.

10. Vorrichtung nach einem der vorhergehenden Ansprüche, **dadurch gekennzeichnet, dass** das Halteelement (36) eine mindestens zweiteilige Teleskopvorrichtung (42, 42') aufweist.

11. Vorrichtung nach einem der vorhergehenden Ansprüche, **dadurch gekennzeichnet, dass** das Halteelement (36) einen mindestens zweiteiligen Gelenkarm (38, 38') aufweist.

12. Verwendung einer Vorrichtung (10) nach einem der vorhergehenden Ansprüche zum Lesen von optischer Information (12) auf einem Stückgut (14), insbesondere von einem Aufkleber auf einem Paket.
